Europäisches Patentamt

European Patent Office

Office européen des brevets

(19)

(11) Publication number: **0 061 797**

A2

(12) **EUROPEAN PATENT APPLICATION**

(21) Application number: **82200298.6**

(22) Date of filing: **08.03.82**

(51) Int. Cl.³: **G 01 F 23/28**

(30) Priority: **27.03.81 IT 6743181**

(43) Date of publication of application:
**06.10.82 Bulletin 82/40**

(84) Designated Contracting States:
**AT BE CH DE FR GB LI LU NL SE**

(71) Applicant: **BONOTTO s.n.c. di Bonotto Giovanni & C.**
**Costruzioni Meccaniche**
**Strada di Lanzo n. 430**
**I-10156 Turin(IT)**

(72) Inventor: **Bonotto, Giovanni**
**Via Giulio 11**
**I-10086 Rivarolo Canavese(IT)**

(74) Representative: **Robba, Eugenio**
**Studio "INTERPATENT" via Caboto 35**
**I-10129 Turin(IT)**

(54) Apparatus for in-line checking of the liquid level in phials.

(57) The invention relates to an apparatus for in-line checking of the liquid level in phials, particularly for the pharmaceutical industry.

The apparatus comprises a conveyor device, an electronic station for checking the liquid level in the phial and for storing the information, a device for expelling the phials to be discarded, a control and check panel with a counter for the pieces.

The electronic station for checking the liquid level in the phial comprises an IR radiation emitting diode and a photocell detector as well as electronic components for discrimination of the electric response indicating anomalous or normal filling of the phial and for processing the corresponding signals.

FIG. 1

EP 0 061 797 A2

"Apparatus for in-line checking of the liquid level in phials"

The present invention relates to an apparatus for in-line checking of the liquid level in phials.

Particularly in the pharmaceutical industry it is very important to check the level of the liquid in the produced phials which are filled by automatic dosing systems which are liable to frequent errors. On the other hand, the standards of the pharmaceutical industry impose a minimum tolerance for variations of the volume of the product contained in the phial and consequently a minimum tolerance for variations of the level of the liquid in the produced phial.

It is therefore indispensable to check each produced phial individually. Hitherto this check was carried out by operators who visually examined each phial with a great waste of manpower and results that were not always reliable.

Alternatively a visual statistic check was made on a set of phial samples.

However, obviously the statistic check has the disadvantage that the phials which are not checked may still be imperfect, i.e. not in conformity with the required standard.

It is reported that also a machine has been brought on the market which automatically effects this check, but it is a very costly and complex machine comprising electronic devices which are so sophisticated that any maintenance and/or repair operation is made problematic.

It would therefore be desirable to have an apparatus. capable of effecting this check by itself automatically without being excessively expensive or causing serious problems with regard to maintenance operations.

It is the object of the present invention to provide an apparatus capable of achieving this result; this apparatus substantially comprises a bench for movably supporting a conveyor device and thereabove an electronic station for detecting the liquid level and a device for expelling the phials which are not in conformity with the standard as well as an electric control and check panel.

The conveyor device is driven by a variable speed gearmotor and constructed to permit the detecting station to be mounted in a very limited space.

The detecting station permits to read electronically the level of the liquid in the phials during their movement on the conveyor device.

The level of the liquid is read continuously by means of a sensor system which will be described in greater detail hereinafter and which comprises sensors for storing also the information relating to any phials that are not completely filled, and for controlling a device for automatically withdrawing such phials from the conveyor belt.

Withdrawal of the defective phials is made automatically in a withdrawal station arranged downstream of the reading station.

A condition required for achieving perfect operation of the system is that the phials should have a cylindrical shape and move continuously in a single file at a maximum speed of 8 m/min.

This speed permits to check more than 20,000 phials per hour with each phial having an outside diameter of 23 mm.

The apparatus is so constructed as to permit the passage of any phial having a cylindrical shape irrespective of its outside dimensions.

All the various stations are easily adjustable by means of micrometer adjusting screws whereas the electronic sensors have a fixed setting.

The electric control panel, in addition to the usual switches and pilot lamps also contains a pair of electric workpiece counters which add up the number of phials discarded in the liquid level checking station and those found to be faultless after checking.

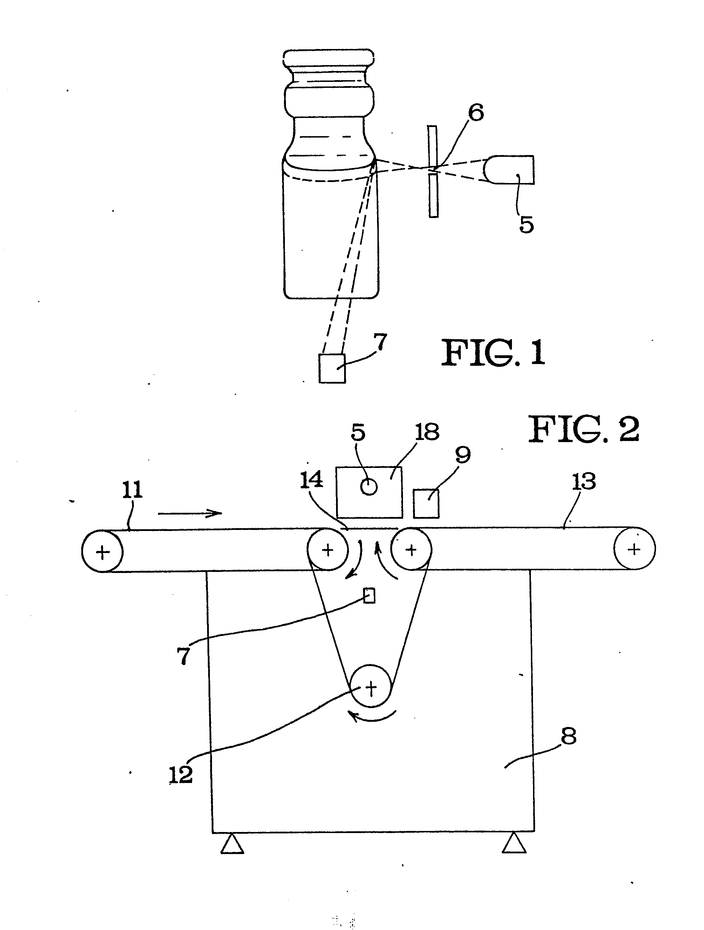

The electronic detector station for detecting the liquid level according to the invention substantially comprises an infrared radiation emitting diode and a photocell detector for detecting the IR radiation emitted by the diode, as schematically shown in Fig. 1.

Generally speaking, it has been found that when an appropriately calibrated beam of IR radiations passes through the liquid mass contained in the phial, or the space above the liquid level, this beam of radiations will be received by the photocell detector to produce a certain type of electric response, whereas when the beam of IR radiations exactly meets the liquid level which will always have a meniscus, this beam will undergo a different type of diffusion and the electric response of the photocell detector will be different from the two aforementioned cases.

This difference of electric response of the photocell detector results from the fact that when the liquid level is located within the beam of radiations coming from the emitter, the radiations are considerably refracted by the convexity of the meniscus forming on the liquid level.

The meniscus behaves like a parabola for concentration and diffraction of the light radiations or any other radiation.

Therefore, the device according to the invention permits to discriminate between three possible conditions:

a - the IR beam meets the phial in the area above the liquid level;

b - the IR beam meets the liquid level;

c - the IR beam meets the phial in the area below the liquid level.

Therefore, by selecting the height of the position of the emitter diode in conformity with the height that the surface of the liquid in the phial should have in the desired correct position, it is possible to obtain different signals depending on whether this height is observed or not; if it is not observed, the IR beam will necessarily be in one of the above conditions a) or c).

As previously mentioned, the device according to the invention is provided with electronic means known per se for storing the electric response produced in the aforementioned three cases and for actuating, when the produced electric response corresponds to one of the conditions a) or c), a device for expelling the phials that are either too full or too empty. The expelling device may be of various nature and operation in its practical realization provided that it comes within the scope of the present invention. Merely by way of a non limiting example, the expelling device may be formed by an electromagnetic hammer or a pneumatically operating hammer or by a transmission or gears or the like.

The phials which are not in conformity with the standard and therefore are discarded, are counted by a workpiece counter arranged on the electric control panel and in the same manner the faultless phials are counted by a totalizer.

The electronic detecting and storing station described above operates continuously and it is the phial itself that generates the clock signal for activating the stations while the phial advances on the conveyor belt. In other words, the system does not read and does not store the information until the phial itself is in the correct position in front of the radiation emitter and gives the so-called "clock" signal which starts the checking cycle for each phial.

This clock signal may be produced by known means of various types. By way of non limiting examples, it is possible to use electronic means such as a photodiode or optical means such as a photocell or a mechanically operated switch or an ultrasound barrier or other similar or equivalent means, all actuated by the phial itself during its translating movement.

The translating movement of the phial may be continuous or intermittent and in both cases the checking which is the purpose of the present invention may be carried out.

A preferred embodiment of the invention will now be described by way of a non limiting example with reference to the accompanying drawings, in which:

Fig. 1 schematically shows a detail of the station for checking the liquid level in the phial;

Fig. 2 schematically shows the assembly of the checking apparatus according to the invention in a front view;

Fig. 3 schematically shows the assembly of the checking apparatus of Fig. 2 in a side view.

Referring to Fig. 1, the diode 5 emits a beam of radiations which is calibrated by the slot 6 and encounters the level of the liquid which in the illustrated case corresponds to the correct position, i.e. to an accurately filled phial. In this case, as previously mentioned, there is some diffraction of the incident beam which is picked up by the detector 7 and converted into a given value of electric current which does not actuate the electromagnetic expelling device 9 shown schematically in Fig. 2.

However, if the phial is not filled to the correct level, the case will be as described above under a) or c) and the electric response will be different from the case wherein the phial is accurately filled, and the expelling device will be actuated.

According to the preferred, not exclusive embodiment of the invention, the photocell detector 7 is arranged below the phial as in this manner it is possible to obtain the same electric response for both conditions a) and c), i.e. when the phial is to be discarded. In this manner only two electric responses are obtained from the photocell detector, one for the case b) and one for both cases a) and c), whereby the processing of the signal is simplified.

However, it will be evident that it is still possible to discriminate between the case b) and the cases a) and c) even if the latter have different electric responses, i.e. if the photocell detector 7 is not arranged below the phial but in another position, for example, laterally of the phial.

Fig. 2 is a schematic front view of the apparatus according to the invention.

The bench 8 is the supporting structure of the apparatus and the conveyor device is arranged above this bench. This device, in the preferred embodiment of the apparatus, is formed by a front conveyor belt 11 and a rear conveyor belt 13, both actuated by the variable speed gearmotor 12.

Arranged between the two conveyor belts 11 and 13 is a supporting surface 14 provided with a slot in its bottom for the passage of the beam of radiations that has hit the phial and will encounter the photocell detector. The latter, still indicated by 7, is arranged below the phial supporting surface because, as previously mentioned, this is particularly advantageous. The radiation emitter 5 is located above the phial supporting surface in the position best shown in Fig. 1.

The electromagnetic device 9 for expelling defective phials is arranged behind the radiation emitter and is only schematically shown in Fig. 2.

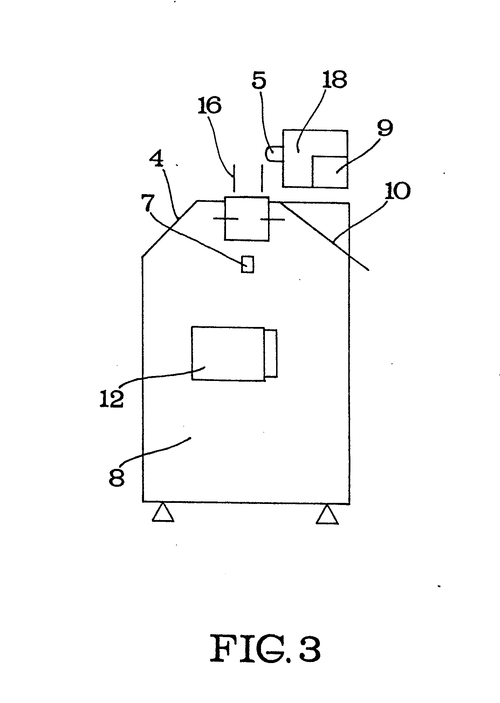

Fig. 3, which is a schematic side view of the apparatus according to the invention, illustrates the check and control panel 4 as well as the emitter supporting and feeding assembly 18 containing also the electronic means for discrimination of the electric responses of the detector and their storage as well as the means for supplying the clock signal. In this preferred embodiment the clock signal is supplied by a transmitter diode. Denoted by 10 is the chute for the descent of the discarded phials, which is located near the electromagnet 9. Finally, guide members 16 serve to retain the phials laterally.

As previously explained, the phials to be checked coming from other steps of the production cycle are fed on to the front conveyor belt 11 on which they proceed in single file and usually closely one behind another. The belt 11 deposits the phial on the supporting surface 14 and when the phial is correctly positioned in front of the emitter diode 5, the readout operation of the system is started by a clock signal obtained from another emitter diode contained in the block 18. The diffracted radiation passes through the slot in the supporting surface 14 and reaches the photocell detector 7 and the electric response is stored and may, or may not, trigger the expelling device 9. If this device is triggered, the phial, which has stopped for just one moment in front of the checking station and is then pushed forward on to the belt 13 by the other phials coming from the belt 11, is removed on to the chute 10. The workpiece counter arranged on the control and check panel registers both the faultless phials and those which have been discarded, and exhibits the total number thereof.

In a copending application of the same Applicant there is described a device for checking the clinch joint of phial caps, also with particular reference to the phials produced by the pharmaceutical industry.

Said device may be associated with the one forming the subject matter of the present invention so as to obtain a combined apparatus adapted to check both the liquid level and the quality of the clinch joint of the phials.

CLAIMS

1. Apparatus for in-line checking of the liquid level in phials, comprising:

a) a conveyor device;

b) a radiation emitter;

c) a slot for calibrating said radiation;

d) a detector for the radiation;

e) electronic means for discrimination of the electric responses of the detector and for storing them;

f) means for setting the devices of points b), d) and e) in readout condition;

g) means for expelling the phials to be discarded;

h) a control and check panel.

2. Apparatus according to claim 1, characterized in that the radiation emitter is so arranged as to direct the calibrated beam toward the surface of the liquid in the phial when the phial is filled to the desired level.

3. Apparatus according to the preceding claims, characterized in that the radiation emitter is a photodiode.

4. Apparatus according to the preceding claims, characterized in that the radiation emitter is an infrared radiation emitting photodiode.

5. Apparatus according to claim 1, characterized in that the detector is a phototransistor.

6. Apparatus according to claim 1, characterized in that the means for setting the devices of points b), d) and e) in readout condition are actuated by the phial itself during its translating movement.

7. Apparatus according to the preceding claim, characterized in that the means for setting the devices of points b), d) and e) in reading condition are selected from the group consisting of photodiodes, photocells, mechanical switches and ultrasound switches.

8. Apparatus according to claim 1, characterized in that the means for expelling the phials to be discarded is selected from the group consisting of electromagnets, solenoid valves and electric gearmotors.

FIG. 1

FIG. 2

FIG.3